# EUROPÄISCHE PATENTANMELDUNG

(11) **EP 4 549 374 A1**
(43) Veröffentlichungstag der Anmeldung: **07.05.2025**
(21) Anmeldenummer: 23020488.5
(22) Anmeldetag: 02.11.2023
(51) Int. Cl.: C01B 3/04, C01B 3/50, F02C 3/22, B01D 53/047

(54) **VERFAHREN UND ANLAGE ZUR GEWINNUNG EINES WASSERSTOFF ENTHALTENDEN PRODUKTS UNTER VERWENDUNG VON AMMONIAK**

(71) Anmelder: Linde GmbH, 82049 Pullach (DE)
(72) Erfinder: Peschel, Andreas, 82049 Pullach (DE); Behrens, Axel, 82049 Pullach (DE); Kammermaier, Friederike, 82049 Pullach (DE); Haselsteiner, Thomas, 82049 Pullach (DE); Reinke, Michael, 82049 Pullach (DE)
(74) Vertreter: Fischer, Werner

(57) **Zusammenfassung**

Die Erfindung betrifft ein Verfahren (100, 100', 100") sowie eine Vorrichtung zur Herstellung eines Wasserstoff enthaltenden Produkts, wobei in einem Produktionsbetriebsmodus ein Ammoniakeinsatz (1, 2) mit katalytischer Unterstützung in einem Ammoniakcracker (20), dem Wärme zugeführt wird, unter Erhalt eines Ammoniak sowie Wasserstoff und Stickstoff enthaltenden Spaltgases (3, 4) umgesetzt wird. Kennzeichnend hierbei ist, dass der Ammoniakcracker (20) weiterhin in einem Stand-by-Betriebsmodus betrieben werden kann, wobei das Spaltgas (3, 4) oder ein Teil davon als Einsatz vor den Ammoniakcracker (20) zurückgeführt wird.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Ammoniak (NH₃) kann gemäß 2 NH₃ → N₂ + 3 H₂ katalytisch zu Stickstoff (N₂) und Wasserstoff (H₂) zerlegt (gecrackt, reformiert) werden. Die Reaktion ist endotherm und wird durch niedrigen Druck und hohe Temperatur begünstigt. Um einen Wasserstoffverdichter zu vermeiden, sind dennoch höhere Drücke wünschenswert.

Die Hauptreaktionsprodukte Wasserstoff und Stickstoff können in einem Gemisch als Produkt bereitgestellt werden, oder es kann eine Aufreinigung des Wasserstoffs erfolgen. Ein Wasserstoff-Stickstoff-Gemisch wird dabei auch als Formiergas bezeichnet. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausführungsformen der Erfindung entsprechen können, wird also Wasserstoff aus Ammoniak gewonnen. Eine "Gewinnung eines Wasserstoff enthaltenden Produkts" im hier verstandenen Sinn schließt also die Gewinnung eines wasserstoffhaltigen Gasgemischs, weiterer Produkte wie Stickstoff und/oder die anschließende Nutzung nicht aus.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Reformierreaktors umfassen, der eine Druckwechseladsorption zur Wasserstoffreinigung zugeordnet ist. Beispielsweise sei in diesem Zusammenhang auf die EP 4 112 539 A1 und die EP 4 112 540 A1 verwiesen, deren Inhalte hier in vollem Umfang aufgenommen werden.

Ein Ammoniakcracker kann einen Feuerraum, in dem mit Katalysatormaterial gefüllte Reaktionsrohre angeordnet sind, sowie ein Abhitzesystem aufweisen. Der Feuerraum kann durch einen oder mehrere mit importiertem Brennstoff betriebene Brenner beheizt werden, die Energie für die endotherm ablaufende Spaltung des durch die Reaktionsrohre geführten Ammoniaks liefern. In entsprechenden Verfahren können nickelbasierte Katalysatoren bei erhöhten Temperaturen von ca. 800 °C verwendet werden.

In entsprechenden Konzepten kann der Wasserstoff aus dem durch den Ammoniakcracker erzeugten Spaltgas mittels der Druckwechseladsorption von einem Restgas abgetrennt werden, wobei das Restgas zur Unterfeuerung des Ammoniakcrackers verwendet werden kann. Zusätzliche Feuerungsleistung kann durch die Verbrennung von reinem Ammoniak bereitgestellt werden. Entsprechende Konzepte eignen sich insbesondere für die Herstellung von Wasserstoff hoher Reinheit.

Die vorliegende Erfindung stellt sich die Aufgabe, entsprechende Verfahren und Anlagen zur Gewinnung eines Wasserstoffprodukts unter Verwendung von Ammoniak zu verbessern, insbesondere den Betrieb bei Minimallast effizienter zu gestalten.

### Offenbarung der Erfindung

Vor diesem Hintergrund werden ein Verfahren und eine Anlage zur Gewinnung eines Wasserstoff enthaltenden Produkts mit den Merkmalen der unabhängigen Patentansprüche vorgeschlagen. Ausgestaltungen sind Gegenstand der abhängigen Patentansprüche und der nachfolgenden Beschreibung.

Die vorliegende Erfindung und ihre Ausgestaltungen ermöglichen eine erhöhte Flexibilität bei der Produktion von Wasserstoff, indem ein Ammoniakcracker neben einem Produktionsbetriebsmodus weiterhin effizient in einem heißen Stand-by-Betriebsmodus betrieben werden kann.

Der Produktionsbetriebsmodus kann dabei bis zu einer minimalen Last, abhängig von der limitierenden Ausrüstung wie den Wärmetauschern und den Ventilen, von 50%, 30% oder sogar 10% der Maximallast durchgeführt werden. Bei einer Last die geringer als die minimale Last ist, ist der Produktionsbetriebsmodus nicht durchführbar. Um den Ammoniakcracker dennoch warmzuhalten und schnell wieder in den Produktionsbetriebsmodus hochfahren zu können, wird der Ammoniakcracker bei einer Last unterhalb der minimalen Last effizient, das heißt mit einem geringen Verbrauch an Ammoniakeinsatz, in dem Stand-by-Betriebsmodus weiterbetrieben.

Dazu wird dem Ammoniakcracker ein Teil des durch den Ammoniakcracker erzeugten Spaltgases wieder zugeführt. Der dem Ammoniakcracker zugeführte Teil kann dabei dieselbe oder eine andere Zusammensetzung wie das Spaltgas aufweisen.

Mit anderen Worten umfasst die Erfindung ein Verfahren zur Herstellung eines Wasserstoff enthaltenden Produkts in dem im Produktionsbetriebsmodus in einem Ammoniakcracker, dem Wärme zugeführt wird, unter Erhalt eines nicht umgesetztes Ammoniak sowie Wasserstoff und Stickstoff enthaltenden Spaltgases katalytisch umgesetzt wird. Im Stand-by-Betriebsmodus wird dem Ammoniakcracker, dem weiterhin Wärme zugeführt wird und der weiterhin ein Ammoniak sowie Wasserstoff und Stickstoff enthaltendes Spaltgases erzeugt, das erzeugte Spaltgas oder ein Teil davon wieder zugeführt. Anders als im Produktionsbetriebsmodus, wird im Stand-by-Betriebsmodus das vom Ammoniakcracker erzeugte Spaltgas nicht zum Druckwechselabsorber geleitet. Weiterhin kann dem System bevorzugt kontinuierlich eine geringe Menge Ammoniakeinsatz zugeführt werden, um einer Erschöpfung von Ammoniak im Ammoniakcracker zu verhindern.

Durch die beschriebenen Maßnahmen können während des Stand-by-Betriebsmodus Temperatur und Druck des Ammoniakcrackers auf hohen Niveaus gehalten werden, sodass ein Wechsel des Ammoniakcrackers in den Produktionsbetriebsmodus jederzeit kurzfristig möglich ist.

In einer Ausführungsform wird im Stand-by-Betriebsmodus das Spaltgas oder ein Teil hiervon unter Erhalt einer gegenüber dem Spaltgas an Wasserstoff abgereicherten und an Ammoniak und Stickstoff angereicherten ersten Produktfraktion und eines gegenüber dem Spaltgas an Wasserstoff angereicherten und an Ammoniak und Stickstoff abgereicherten ersten Restgases, über eine Membran, insbesondere eine Polymermembran, verarbeitet. Dadurch können die Bestandteile des Spaltgases aufgeteilt und im Stand-by-Betriebsmodus für verschiedene Zwecke weiterverwendet werden, wobei die erste Produktfraktion dem Ammoniakcracker zugeführt wird.

Das erfindungsgemäße Verfahren weiterbildend wird vorgeschlagen, im Stand-by-Betriebsmodus das dem Ammoniakcracker zugeführte Spaltgas oder die dem Ammoniakcracker zugeführte erste Produktfraktion durch einen Kompressor zu verdichtetem Spaltgas oder zu einer komprimierten ersten Produktfraktion zu verdichten. Dabei können das Spaltgas oder die erste Produktfraktion, abhängig vom Kompressor, insbesondere heiß bzw. bei erhöhter Temperatur verdichtet werden.

Sinnvollerweise wird das Spaltgas vor seiner Verarbeitung über die Membran bzw. vor der Verdichtung durch den Kompressor einer Wärmeintegration unterzogen, die insbesondere zunächst durch einen sog. Feed-Effluent-Wärmetauscher und anschließend durch einen Trimmkühler ausgeführt wird, wodurch der Gesamtwärmebedarf des Verfahrens ausgeglichen werden kann.

In einer weiteren Ausführungsform wird im Stand-by-Betriebsmodus ein Teil des Spaltgases und/oder der ersten Produktfraktion zur Bereitstellung zumindest eines Teils der dem Ammoniakcracker zugeführten Wärme verfeuert. Um den Verlust von Stickstoff durch die Verfeuerung, auszugleichen, wird dem Ammoniakcracker weiterhin Stickstoffgas, insbesondere aus einem Flüssigstickstofftank, zugeführt.

Währens des Produktionsbetriebsmodus wird das Spaltgas oder ein Teil hiervon vorzugsweise unter Erhalt einer gegenüber dem Spaltgas an Wasserstoff und Stickstoff angereicherten und an Ammoniak abgereicherten zweiten Produktfraktion und eines gegenüber dem Spaltgas an Wasserstoff und Stickstoff abgereicherten und an Ammoniak angereicherten zweiten Restgases verarbeitet. Dazu wird das Spaltgas insbesondere einer Druckwechseladsorption unterzogen. Eine derartige Ausgestaltung des Verfahrens ist besonders dann sinnvoll, wenn die zweite Produktfraktion im Wesentlichen aus Wasserstoff bestehen soll. Wenn als zweite Produktfraktion ein Formiergas bereitgestellt werden soll, zu dessen Gewinnung im Wesentlichen lediglich Wasser und Ammoniak aus dem Spaltgas abgeschieden werden müssen, kann auf eine Druckwechseladsorption verzichtet werden. An beliebiger Stelle kann dabei ein Gasstrom abgezweigt und für die Beheizung des Ammoniakcrackers verwendet werden.

Die zweite Produktfraktion kann in Ausgestaltungen des erfindungsgemäßen Verfahrens mit Druckwechseladsorption insbesondere zu mehr als 75%, 80%, 90%, 95%, 98%, 99%, 99,5% oder 99,9% aus Wasserstoff bestehen und entsprechend 0,1 bis 25% an anderen Gaskomponenten aufweisen. Das zweite Restgas kann insbesondere 0 bis 10% Ammoniak aufweisen und ansonsten aus Stickstoff und Wasserstoff sowie, falls ein wasserhaltiger Ammoniakeinsatz verwendet wird, auch aus Wasser bestehen.

In einer entsprechenden Verfahrensvariante mit Druckwechseladsorption kann der Teil des Spaltgases, der zur Bereitstellung von dem Ammoniakcracker zugeführter Wärme verfeuert wird, das erste Restgas oder einen Teil hiervon und/oder die zweite Produktfraktion oder einen Teil hiervon umfassen. Beliebige Kombinationen sind dabei in entsprechenden Ausgestaltungen möglich.

Ferner kann in entsprechenden Ausführungsformen auch nur ein erster Teil des Spaltgases der Druckwechseladsorption unterworfen werden. Der Teil des Spaltgases, der zur Bereitstellung eines ersten Anteils der dem Ammoniakcracker zugeführten Wärme verfeuert wird, kann dabei einen zweiten Teil des Spaltgases umfassen, der in solchen Ausführungsformen verfeuert wird, ohne der Druckwechseladsorption unterworfen zu werden.

Weiterhin ist in einer entsprechenden Ausführungsform vorgesehen, dass die zweite Produktfraktion oder ein Teil davon in einem Pufferbehälter gespeichert wird, beispielsweise dann, wenn durch den Ammoniakcracker mehr an zweiter Produktfraktion erzeugt als gefordert wird und die Last des Ammoniakcrackers nicht schnell genug heruntergefahren werden kann. Ein Teil der gespeicherten zweiten Produktfraktion kann zu einem späteren Zeitpunkt insbesondere zur Bereitstellung eines Anteils der dem Ammoniakcracker zugeführten Wärme verfeuert werden.

In einer Ausführungsform kann zumindest ein Teil der zweiten Produktfraktion einer Gasturbine, die mit einem elektrischen Generator gekoppelt ist, als Brenngas zugeführt werden.

In einer Ausführungsform werden im Produktionsbetriebsmodus der Ammoniakeinsatz und im Stand-by-Betriebsmodus das Spaltgas oder die erste Produktfraktion sowie insbesondere auch die geringe Menge an Ammoniakeinsatz und/oder an Stickstoff durch eine Vorbehandlungseinheit verdampft und überhitzt bzw. angewärmt, um anschließend dem Ammoniakcracker als Einsatz zugeführt zu werden.

Bevorzugt wird zur Beheizung der Vorbehandlungseinheit im Ammoniakcracker anfallende Abhitze und/oder Wärme eingesetzt, die mit Hilfe von durch den Generator erzeugter elektrischer Energie produziert wird. Das System kann dabei entweder eine der beiden Vorgehensweisen verwenden, insbesondere aber auch ein hybrides System bereitstellen, bei dem ein Teil der Wärme vom Ammoniakcracker bereitgestellt wird und ein Teil der Wärme mit Hilfe von durch den Generator erzeugter elektrischer Energie produziert wird. Die über den Generator bereitgestellte Wärme hat den Vorteil, dass dadurch Wärme mit hoher Effizienz erzeugt werden kann, während die Nutzung der Abhitze des Ammoniakcracker eine erhöhte Lastflexibilität und die Unabhängigkeit von einer Gasturbine ermöglicht.

In einer weiteren Ausführungsform weist die Vorbehandlungseinheit einen Wärmepuffer auf, der beispielsweise elektrisch geheizt wird. Bei dem Wärmepuffer handelt es sich etwa um ein Thermo-Ölbad, eine Salzschmelze oder einen Festkörper. Durch den Wärmepuffer kann die Lastflexibilität des Ammoniakcrackers erhöht und somit der Start des Produktionsbetriebsmodus beschleunigt werden.

In einer anderen Ausführungsform wird der Ammoniakcracker bei einer Abschaltung - insbesondere einer Schnellabschaltung - mit reinem Stickstoff, der beispielsweise aus einem Flüssigstickstofftank bezogen wird, gespült, um ein Überhitzen der Reaktionsrohre zu verhindern.

Eine vorgeschlagene Anlage zur Herstellung eines Wasserstoff enthaltenden Produkts mit einem Ammoniakcracker ist dafür eingerichtet, im Produktionsbetriebsmodus Ammoniak im Ammoniakcracker unter Erhalt eines Ammoniak sowie Wasserstoff und Stickstoff enthaltenden Spaltgases katalytisch umzusetzen. Die Anlage ist weiterhin dafür eingerichtet, in einem Stand-by-Betriebsmodus betrieben werden zu können, wobei dem Ammoniakcracker im Stand-by-Betriebsmodus Spaltgas oder ein Teil davon als Einsatz zuführbar ist.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der der Erfindung durchzuführen.

### Kurze Beschreibung der Zeichnung

Ausführungsformen der Erfindung werden nachfolgend rein beispielhaft unter Bezugnahme auf die beigefügten Zeichnungen unter Erläuterung des technischen Hintergrunds beschrieben.
Figur 1 veranschaulicht ein Verfahren bzw. eine Anlage gemäß einer Ausführungsform der vorliegenden Erfindung im Produktionsbetriebsmodus,
Figur 2 veranschaulicht ein Verfahren bzw. eine Anlage gemäß einer Ausführungsform der vorliegenden Erfindung im Stand-by-Betriebsmodus, und
Figur 3 veranschaulicht ein Verfahren bzw. eine Anlage gemäß einer weiteren Ausführungsform der vorliegenden Erfindung im Stand-by-Betriebsmodus.

### Ausführungsformen der Erfindung

Die nachfolgend beschriebenen Ausführungsformen werden nur zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen anzusehen sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

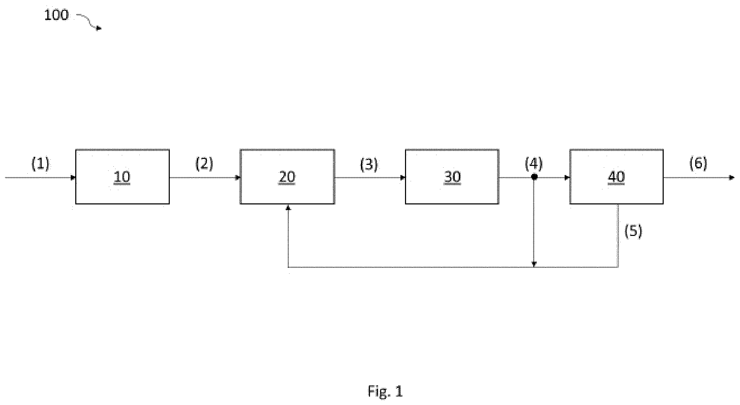

In Figur 1 ist ein Verfahren bzw. eine Anlage gemäß einer Ausführungsform der vorliegenden Erfindung im Produktionsbetriebsmodus veranschaulicht und insgesamt mit 100 bezeichnet.

In der hier veranschaulichten Ausgestaltung wird ein Ammoniakeinsatz 1, beispielsweise aus einem Tank, falls erforderlich mittels mit einer Pumpe flüssig zugeführt und in einer Vorbehandlungseinheit 10 verdampft und überhitzt. Die von der Vorbehandlungseinheit 10 benötigte Wärmeenergie kann dabei beispielsweise von einem nachgeschalteten Ammoniakcracker 20 oder durch über eine Dampfturbine (nicht gezeigt) erzeugte elektrische Energie bereitgestellt werden.

Das verdampfte und überhitzte Ammoniak 2 wird dem Ammoniakcracker 20 zugeführt, um mit katalytischer Unterstützung in ein Spaltgas 3 umgesetzt zu werden, das neben Wasserstoff und Stickstoff auch nicht umgesetztes Ammoniak enthält. Durch Wärmeintegration 30 wird das heiß aus dem Ammoniakcracker 20 austretende Spaltgas 3 abgekühlt und liegt dann als abgekühltes Spaltgas 4 vor. Nicht umgesetztes Ammoniak wird mittels einer Druckwechseladsorption 40 in einem Restgas 5 zurückgewonnen. In der Druckwechseladsorption 40 wird ferner eine Produktfraktion 6 erhalten, die in der vorliegenden spezifischen Ausgestaltung hauptsächlich Wasserstoff und Spuren von Stickstoff enthält. Im Ammoniakeinsatz enthaltenes, im Ammoniakcracker 20 inertes Wasser kann optional mit dem Ammoniak abgetrennt werden und Teil des Restgases 5 sein.

Das Restgas 5 der Druckwechseladsorption 40 wird in dieser Ausführungsform in einem oder mehreren Brennern des Ammoniakcrackers 20 als Energiequelle verwendet. Alternativ ist auch die Verwendung in einem externen befeuerten Heizer (nicht dargestellt) möglich. Die Differenz des Wärmebedarfs für die endotherme Spaltreaktion im Ammoniakcracker 20 wird durch die Verbrennung eines Teils des Spaltgases 4 gedeckt.

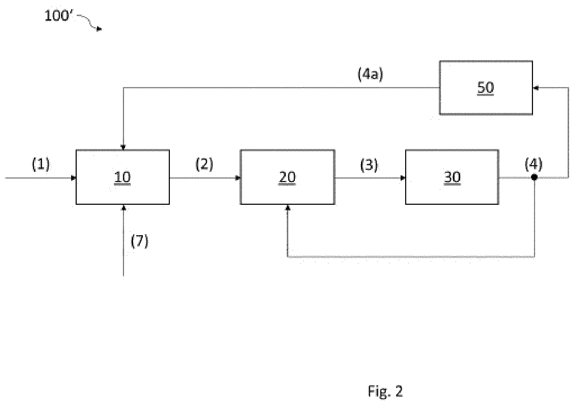

In Figur 2 ist ein Verfahren bzw. eine Anlage gemäß einer Ausführungsform der vorliegenden Erfindung im Stand-by-Betriebsmodus veranschaulicht und insgesamt mit 100' bezeichnet.

Im Stand-by-Betriebsmodus wird der Vorbehandlungseinheit 10 kontinuierlich eine geringe Menge an Ammoniakeinsatz 1 zugeführt, um eine Erschöpfung von Ammoniak zu verhindern. Weiterhin wird das vom Ammoniakcracker 20 erzeugte Spaltgas 3 einer Wärmeintegration 30 unterzogen, bei der das Spaltgas 3 abgekühlt wird. Die Wärmeintegration 30 kann beispielsweise durch einen sog. Feed-Effluent-Wärmetauscher mit anschließendem Trimmkühler durchgeführt werden.

Ein Teil des abgekühlten Spaltgases 4 wird anschließend einem Brenner des Ammoniakcrackers 20 zugeführt und zur Erzeugung zumindest eines Teils der dem Ammoniakcracker 20 zuzuführenden Wärme verfeuert. Der restliche Teil des Spaltgases 4 wird durch einen Kompressor 50 zu verdichtetem Spaltgas 4a komprimiert und über die Vorbehandlungseinheit 10 dem Ammoniakcracker 20 als Einsatz zugeführt.

Um bei der Verfeuerung des Spaltgases 4 verbrauchten Stickstoffs auszugleichen, wird der Vorbehandlungseinheit 10 auch Stickstoff 7 von einer externen Quelle, beispielsweise einem Flüssigstickstofftank, zugeführt.

Durch diesen Aufbau bzw. dieses Vorgehen kann der Ammoniakcracker 20 auch zu einer Zeit, in der kein Wasserstoff oder Formiergas erzeugt werden soll, auf einer erhöhten Temperatur und einem erhöhten Druck gehalten werden, sodass der Ammoniakcracker 20 zu jeder Zeit schnell wieder hochgefahren und im Produktionsbetriebsmodus betrieben werden kann.

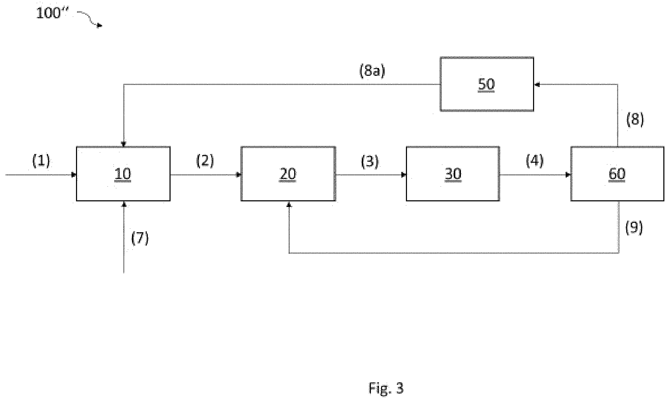

In Figur 3 wird ein Verfahren bzw. eine Anlage gemäß einer weiteren Ausführungsform der vorliegenden Erfindung im Stand-by-Betriebsmodus veranschaulicht und insgesamt mit 100" bezeichnet.

Im Unterschied zu der in Figur 2 beschriebenen Ausführungsform wird das abgekühlte Spaltgas 4 durch eine Membran 60 weiterbehandelt. Dabei wird das Spaltgas 4 in eine Produktfraktion 8, die an Wasserstoff abgereichert und an Stickstoff und Ammoniak angereicht ist, und ein Restgas 9, dass an Stickstoff und Ammoniak abgereichert und an Wasserstoff angereicht ist, zerlegt.

Das Restgas 9 wird einem Brenner zugeführt und zur Bereitstellung von Wärme für den Ammoniakcracker 20 verfeuert. Zu diesem Zweck kann zusätzlich auch ein Teil des abgekühlten Spaltgases 4 verwendet werden.

Die Produktfraktion 8 wird durch einen Kompressor 50 komprimiert, um als verdichtete Produktfraktion 8a der Vorbehandlungseinheit 10 zugeführt zu werden, wo sie vor ihrer Einleitung in den Ammoniakcracker 20 zusammen mit einer geringen Menge an Ammoniakeinsatz 1 und einer gewissen Menge an Stickstoffgas 7 angewärmt wird.

In allen gezeigten Ausführungsformen kann die Vorbehandlungseinheit 10 einen Wärmepuffer aufweisen, der beispielsweise als Thermo-Ölbad oder als Salzschmelze oder als Festkörper ausgeführt ist, und in dem Wärmeenergie, die beispielsweise aus erneuerbaren Energien gewonnen wird, gespeichert wird, um so die Vorbehandlungseinheit 10 schnell in einen operativen Modus bringen zu können.

## Patentansprüche

1. Verfahren (100, 100`, 100") zur Herstellung eines Wasserstoff enthaltenden Produkts, wobei in einem Produktionsbetriebsmodus ein Ammoniakeinsatz (1, 2) mit katalytischer Unterstützung in einem Ammoniakcracker (20), dem Wärme zugeführt wird, unter Erhalt eines Ammoniak sowie Wasserstoff und Stickstoff enthaltenden Spaltgases (3, 4) umgesetzt wird, **dadurch gekennzeichnet, dass** der Ammoniakcracker (20) weiterhin in einem Stand-by-Betriebsmodus betrieben werden kann, wobei das Spaltgas (3, 4) oder ein Teil davon als Einsatz vor den Ammoniakcracker (20) zurückgeführt wird.

2. Verfahren (100, 100`, 100") nach Anspruch 1, wobei im Stand-by-Betriebsmodus das Spaltgas (3, 4) oder ein Teil hiervon über eine Membran in eine gegenüber dem Spaltgas (3, 4) an Wasserstoff abgereicherte und an Ammoniak und Stickstoff angereicherte erste Produktfraktion (8) sowie ein gegenüber dem Spaltgas (3, 4) an Wasserstoff angereichertes und an Ammoniak und Stickstoff abgereichertes erstes Restgases (9) getrennt wird, wobei die erste Produktfraktion (8) oder ein Teil davon als Einsatz vor den Ammoniakcracker (20) zurückgeführt wird.

3. Verfahren (100, 100`, 100") nach einem der Ansprüche 1 oder 2, wobei das im Stand-by-Betriebsmodus als Einsatz vor den Ammoniakcracker (20) zurückgeführte Gas (3, 4, 8) durch einen Kompressor (50) komprimiert wird.

4. Verfahren (100, 100`, 100") nach einem der vorhergehenden Ansprüche, wobei im Stand-by-Betriebsmodus ein Teil des Spaltgases (3, 4) zur Bereitstellung eines Anteils der dem Ammoniakcracker (20) zugeführten Wärme verfeuert wird.

5. Verfahren (100, 100`, 100") nach einem der vorhergehenden Ansprüche, wobei dem Ammoniakcracker (20) im Stand-by-Betriebsmodus Ammoniak (2) und/oder Stickstoffgas (7) als Einsatz zugeführt wird.

6. Verfahren (100, 100`, 100") nach einem der vorhergehenden Ansprüche, wobei im Produktionsbetriebsmodus das Spaltgas (3, 4) oder ein Teil hiervon unter Erhalt einer gegenüber dem Spaltgas (3, 4) an Wasserstoff und Stickstoff angereicherten und an Ammoniak abgereicherten zweiten Produktfraktion (6) und eines gegenüber dem Spaltgas (3, 4) an Wasserstoff und Stickstoff abgereicherten und Ammoniak angereicherten zweiten Restgases (5) durch Druckwechseladsorption verarbeitet wird.

7. Verfahren (100, 100', 100") nach dem vorhergehenden Anspruche, wobei die zweite Produktfraktion (6) oder ein Teil davon einem Pufferbehälter gespeichert wird.

8. Verfahren (100, 100', 100") nach dem vorhergehenden Anspruch, wobei ein Teil der im Pufferbehälter gespeicherten zweiten Produktfraktion (6) zur Bereitstellung eines Anteils der dem Ammoniakcracker (20) zugeführten Wärme verfeuert wird.

9. Verfahren (100, 100', 100") nach einem der Ansprüche 7 bis 9, bei dem das Spaltgas (4) oder ein Teil hiervon oder die zweite Produktfraktion (6) oder ein Teil hiervon einer mit einem Generator gekoppelten Gasturbine als Brenngas zugeführt wird.

10. Verfahren (100, 100', 100") nach einem der vorhergehenden Ansprüche, wobei im Produktionsbetriebsmodus und/oder im Stand-by-Betriebsmodus das Spaltgas (3) direkt nach dem Ammoniakcracker (20) einer Wärmeintegration (30) unterzogen wird, nach der das Spaltgas (3) als abgekühltes Spaltgas (4) vorliegt.

11. Verfahren (100, 100', 100") nach einem der vorhergehenden Ansprüche, wobei ein dem Ammoniakcracker (20) zuzuführender Einsatz (1, 3, 4, 8) in einer Vorbehandlungseinheit (10) verdampft und überhitzt bzw. angewärmt wird, wobei der Vorbehandlungseinheit (10) im Ammoniakcracker (20) anfallende Abhitze und/oder durch elektrischen Strom erzeugte Wärme zugeführt wird.

12. Verfahren (100, 100', 100") nach einem der vorhergehenden Ansprüche, wobei die Vorbehandlungseinheit (10) einen Wärmepuffer aufweist, der insbesondere elektrische geheizt werden kann.

13. Verfahren (100, 100', 100") nach einem der vorhergehenden Ansprüche, wobei der Ammoniakcracker (20) bei einer Abschaltung der Anlage mit reinem Stickstoff gespült wird.

14. Anlage (100, 100', 100") zur Herstellung eines Wasserstoff enthaltenden Produkts, mit einem Ammoniakcracker (20), der dazu eingerichtet ist, in einem Produktionsbetriebsmodus einen Ammoniakeinsatz (1, 2) in ein Ammoniak sowie Wasserstoff und Stickstoff enthaltendes Spaltgas (3, 4) katalytisch umzusetzen, **dadurch gekennzeichnet, dass** der Ammoniakcracker (20) weiterhin in einem Stand-by-Betriebsmodus betrieben werden kann, wobei dem Ammoniakcracker (20) Spaltgas (3, 4) oder ein Teil davon als Einsatz zuführbar ist.

15. Anlage (100, 100', 100") nach dem vorhergehenden Anspruch, die zur Durchführung des Verfahrens nach einem der Ansprüche 1 bis 13 eingerichtet ist.
